# EUROPEAN PATENT APPLICATION

(11) **EP 0 565 925 A1**
(43) Date of publication of application: **20.10.1993**
(21) Application number: 93104923.3
(22) Date of filing: 25.03.1993
(51) Int. Cl.: G01K 1/14, F25D 29/00

(54) **Device for measuring the temperature of containers placed in a refrigerator**

(30) Priority: 14.04.1992 IT MI920909
(71) Applicant: WHIRLPOOL EUROPE B.V., NL-5507 SK Veldhoven (NL)
(72) Inventor: Grosselli, Mario, c/o Whirlpool Italia s.r.l., I-21025 Comerio (VA) (IT); Germi, Franco, c/o Whirlpool Italia s.r.l., I-21025 Comerio (VA) (IT)
(74) Representative: Guerci, Alessandro

(57) **Abstract**

A device (D) for measuring the temperature of containers (9) placed in a refrigerator (1) and hence the temperature of foods or liquids contained in said containers (9) comprises at least one usual temperature sensor (11).

This sensor is associated with retention means (12) for bringing the sensor (11) into contact with a container (9) and maintaining it in contact therewith, said sensor (11) and the corresponding retention means (12) being available within the refrigerator (1) and being associated via connection means (25) with means (30) for controlling the temperature measured by the sensor (11), said control means (30) being connected to means (60) for displaying the temperature of the container and of its contents and/or to means (60) for displaying when a predetermined desired temperature of the container (9) and of its contents has been reached.

## Description

This invention relates to a device for measuring the temperature of a container, such as a bottle or the like, placed in a refrigerator, and for hence determining the temperature of a food or liquid contained in said container.

There is a known requirement for measuring the temperature of a food, for example a drink contained in a container such as a bottle or a cardboard container or the like, inserted in the refrigerator and placed for example in a usual shelf of the refrigerator door liner.

For this purpose temperature probes of positive or negative temperature coefficient (PTC or NTC) type are used, placed in contact with the container to measure its temperature.

As it is not possible to insert probes into the body of which the temperature is to be measured, it is very difficult to achieve homogeneous uniform contact between said body and the probe. The temperature measured by the probe is therefore not the effective temperature of the object subjected to measurement (or hence of its contents), but is affected by a sometimes considerable error induced by the surrounding environment.

Known methods therefore do not result in reliable measurement of the temperature of a container (or of its contents) placed in a refrigerator.

An object of the present invention is to provide a device of the aforesaid type which allows reliable measurement of the temperature of a container and its contents in a refrigerator.

A further object is to provide a device of the stated type which enables the container temperature to be known while maintaining the usual refrigerator door closed.

A further object is to provide a device of the stated type which enables controlled reduction of the temperature of a container and its contents to be achieved.

These and further objects which will be apparent to the expert of the art are attained by a device of the stated type comprising at least one temperature sensor, characterised in that said sensor is associated with retention means for bringing the sensor into contact with a container and maintaining it in contact therewith, said sensor and the corresponding retention means being available within the refrigerator and being associated via connection means with means for controlling the temperature measured by the sensor, said control means being connected to means for displaying the temperature of the container and of its contents and/or to means for displaying when a predetermined desired temperature of the container and of its contents has been reached.

The present invention will be more apparent from the accompanying drawing, which is provided by way of non-limiting example and in which:
Figure 1 represents a domestic refrigerator with which the device of the invention is associated;
Figure 2 is a partial sectional view of a first embodiment of the device according to the invention;
Figure 3 is a perspective view of a part of a second embodiment of the invention;
Figure 4 is a schematic representation of the device according to the invention; and
Figure 5 is a partial schematic view of a third embodiment of the invention.

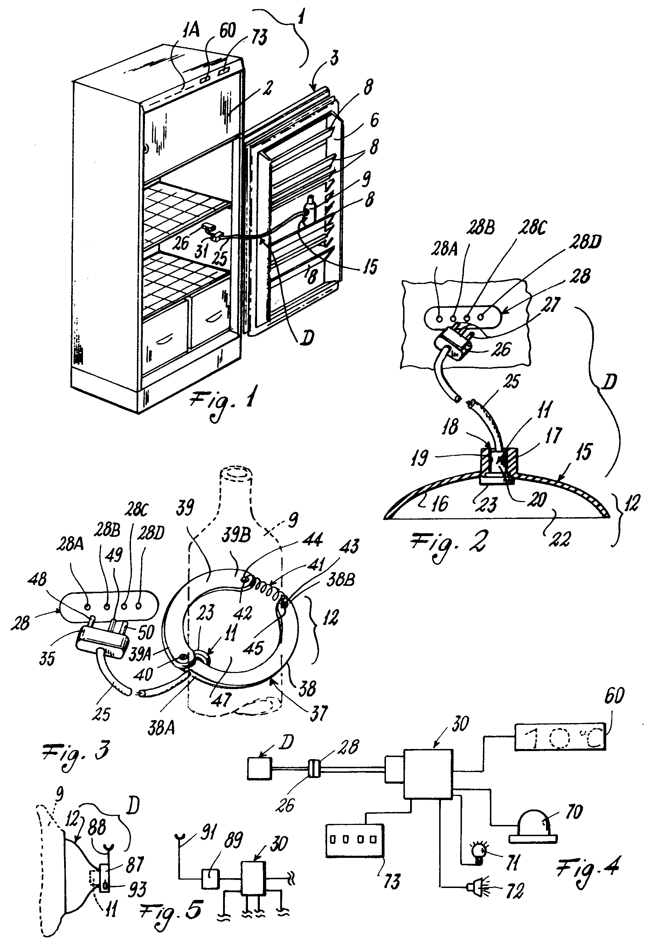

With reference to the figures, the refrigerator 1 represents an upright domestic refrigerator comprising two doors 2 and 3 located in correspondence with a refrigeration compartment and freezer compartment (only the refrigeration compartment is shown in Figure 1 in which it is indicated by 5). Shelves 8 are provided on the liner 6 of the door 2 of the compartment 5 to receive in known manner objects such as bottles (one bottle 9 being shown in Figure 1), cardboard containers and various foods such as butter, eggs and the like.

The refrigerator 1 is provided with the device D of the invention. It comprises a temperature sensor 11 for example of known NTC or PTC type, associated with a member 12 able to maintain said sensor 11 in intimate contact with the container or bottle (the bottle 9 in the example shown in Figure 1) in order to measure its temperature and hence the temperature of its contents.

In the embodiment shown in Figure 2, this member is a sucker 15 comprising a portion 16 able to adhere by vacuum to the bottle 9 in known manner, with said portion 16 there being associated a substantially cylindrical part 17 provided with a through hole 18 having a stepped wall. The hole 18 contains the sensor 11, which has an essentially stepped body to mate with the stepped wall 19 of said hole. This latter cooperates as an interference fit with the body 20 of the sensor 11 and retains it. The measuring part 23 of the sensor projects from the hole 18 into a cavity 22 in the sucker 15 defined by the portion 16 so as to cooperate directly with the bottle 9 when the sucker is associated with this latter.

The sensor 11 is connected via an electric cable 25 to a plug 26 with equidistant pins 27 arranged to cooperate with a socket 28 to connect the sensor 11 to a circuit 30 for controlling the temperature of the bottle 9.

Advantageously the cable 25 is associated with a usual roll-up device 31 (shown schematically in Figure 1) so that its bulk can be reduced when the device D is not used.

The socket 28 comprises a plurality of holes (four in Figure 2, indicated by 28A, 28B, 28C, 28D) to receive the plug 26 or a plug 35 associated with a sensor 11 fixed to another member 12 shown in Figure 3.

In this figure, in which parts corresponding to those of Figure 2 are indicated by the same reference numerals, the member 12 is a gripper element 37 comprising two semicircular portions 38 and 39 hinged together (and hence movable relative to each other) at 40 at their ends 38A and 39A and pulled together by a tension spring 41 at their other ends 38B and 39B; said spring 41 is connected to said portions by having its opposing curved ends 42 and 43 inserted through holes 44 and 45 provided at the ends 38B and 39B of said portions. One of these latter (the portion 38 in the figure) comprises a seat for the sensor 11, the measuring part 23 of which projects into an inner part 47 of the gripper element 37 which is arranged to cooperate with the bottle 9 (or the like) during the measurement of its temperature.

The plug 35 of the element 37 comprises pins 48, 49 and 50, of which two (the pins 49 and 50) are close together and the other (the pin 48) is further apart.

In this manner, on inserting the plug 26 or 35 into the socket 28 the control circuit 30 is able to recognize the type of member 12 being used (ie whether the sucker 15 or the element 37). This circuit, advantageously of microprocessor type, is hence able to correct the data obtained by the members 12 in their various forms in accordance with known comparison algorithms. These corrections are necessary to take account of the different arrangement of the part 23 of the sensor 11 on the container or bottle 9, depending on whether the sensor is associated with a sucker (greater contact) or with the gripper element (lesser contact) or with a one-piece annular element placed over the neck of the bottle 9.

The circuit 30 is connected to a known display 60, to the usual power circuit of the motor-compressor unit 70 of the refrigeration circuit of the refrigerator 1, to a warning lamp 71 and horn 72, and to a usual interface 73 (for example of pushbutton type) by which the user can set the desired temperature for the container or bottle 9 (and hence for the contents thereof).

It will now be assumed that the device D of the figures is to be used, and specifically by way of example that device having its sensor 11 associated with the sucker 15.

The use of the device in which the sensor 11 is associated with the gripper element 37 is totally analogous to that of the sucker and will not be described.

In the case under examination the sucker 15 is pressed onto the bottle 9 so that the sensitive part 23 of the sensor 11 adheres thereto. The cable 25 is extracted from the known roll-up device 31 so that the bottle can be positioned at any point within the refrigerator 1. By associating the cable 25 with the roll-up device, the sensor 11 can be fitted to a body or container positioned at any point within the refrigerator without any limitation of distance between the container and the socket 28, which is provided at a fixed point within the compartment 5 (or within the freezer compartment) of the refrigerator. The lack of limitation depends however on a sufficient total length of the cable 25.

The plug 26 is now inserted into the socket 28. The circuit 30 senses the presence of the connection via the holes 28B, 28C and 28D of the socket, to hence recognize that the sensor is associated with the sucker. If the sensor associated with the element 37 had been used, the connection between the sensor and the circuit 30 would have been made via the holes 28A, 28C and 28D of the socket 28. This would have enabled the circuit 30 to recognize that the sensor 11 was associated with the element 37 and hence make the necessary corrections to the temperature measured by this sensor.

After fitting the sensor to the bottle 9 the door 3 of the refrigerator 1 is closed.

The circuit 30 measures the bottle temperature and using suitable known comparison algorithms determines the temperature of the bottle contents (the algorithms take account of the constituent material of the bottle or container). A desired temperature for the contents of the bottle 9 has previously been set in the circuit 30 via the interface 73.

The circuit 30 displays the temperature of the contents of the bottle 9 in known manner on the display 60, which is advantageously positioned on the front edge 1A of the refrigerator (see Figure 1) together with the interface 73 and the indicators 71 and 72.

On attaining the set temperature, the circuit 30 acts on the indicators 71 and 72 in any known manner to cause them to operate.

The user hence knows that the temperature of the contents of the bottle 9 is at the desired value and the bottle can be extracted from the refrigerator 1. If the refrigerator 1 is of the type provided for refrigerating only bottles or similar containers (such as a known frigobar) the circuit 30, on the basis of the temperature determined by the device D, acts on the compressor 70 to halt it when the temperature of the contents of the bottles placed in the frigobar is at the set value.

To isolate the sensor 11 from the environmental air it can be contained in a body of polyester or other insulating material.

The sensor would then have only its measuring part 23 free, and in contact with the container or bottle.

In a further modification of the invention (see Figure 5, in which parts corresponding to those of Figures 1 to 4 are indicated by the same reference numerals), the sensor 11 is connected to a transmitter 87 of radio waves or the like provided with its own antenna 88 and supported by the member 12. The transmitter is arranged to cooperate remotely with a receiver 89 connected to the circuit 30 and provided with its own receiving antenna 91. In this manner the information regarding the temperature of the container or bottle 9 (obtained by the sensor 11 even if the container is external to the refrigerator 1) is transmitted remotely to the receiver 89 which in known manner feeds this information to the circuit 30. A suitable switch 93 is associated with the receiver to add to the temperature information obtained by the sensor 11 an electrical information signal generated in any known manner by the transmitter 87 when the sensor 11 is fitted to a container external to the refrigerator 1. In this case, the switch 93 is positioned in a suitable position on the transmitter on extracting the container from the refrigerator, so that the circuit 30 recognizes that the container is positioned external to the refrigerator. In such a situation said circuit operates only on the display 60 in accordance with a predetermined program, and not on the other members of the refrigeration circuit of the refrigerator.

With this modified embodiment it is hence possible to check the temperature of a container and its contents at a distance, ie to check its temperature even if it is outside the refrigerator.

If however the container is inside the refrigerator, the temperature information received by the circuit 30 causes it to operate as already described in relation to Figures 1 to 4.

Various embodiments of the invention have been described. Other embodiments are however possible (such as an embodiment in which the cable 25 associated with the sensor is not combined with a roll-up device but is of fixed length and can be wound about known support hooks provided in the refrigerator, or an embodiment in which the cable 25 is associated with a winder inserted in the refrigerator 1, said cable being connected to the circuit 30), to be considered as falling within the scope of the present patent.

## Claims

1. A device for measuring the temperature of containers placed in a refrigerator and hence the temperature of foods or liquids contained in said containers (9), comprising at least one usual temperature sensor, characterised in that said sensor (11) is associated with retention means (12) for bringing the sensor (11) into contact with a container (9) and maintaining it in contact therewith, said sensor (11) and the corresponding retention means (12) being available within the refrigerator (1) and being associated via connection means (25) with means (30) for controlling the temperature measured by the sensor (11).

2. A device as claimed in claim 1, characterised in that the control means (30) are connected to means (60) for displaying the temperature of the container and of its contents and/or to means (60) for displaying when a predetermined desired temperature of the container (9) and of its contents has been reached.

3. A device as claimed in claim 1, characterised in that the control means (30) are connected to an interface (73) by which the user operates on said means (30).

4. A device as claimed in claim 1, characterised in that the control means (30) are connected to the usual motor-compressor unit (70) of the refrigerator.

5. A device as claimed in claim 1, characterised in that the retention means are a sucker.

6. A device as claimed in claim 5, characterised in that the sucker (15) comprises a retention portion (16) to be fitted to the container or bottle (9) and a portion (17) which projects from said retention portion (16) and comprises a seat (18) for the sensor (11).

7. A device as claimed in claim 6, characterised in that the seat (18) for the sensor (11) is a hole with a stepped wall (19), said hole receiving the sensor (11) which has an externally stepped body (20) to mate with the stepped wall (19) of said seat (18), the measuring part (23) of said sensor projecting from said hole into a cavity (22) of the sucker (15) defined by the retention portion (16).

8. A device as claimed in claim 1, characterised in that the retention means (12) are an annular element.

9. A device as claimed in claim 1, characterised in that the retention means (12) are a gripper element (37) comprising two curved portions (38, 39) hinged together at (40) at one of their ends (38A, 39A) and connected together at their other end (38B, 39B) by an elastic element (41), said portions being able to move relative to each other.

10. A device as claimed in claim 1, characterised in that the connection means are an electric cable (25) terminating at its free end in a connection element (26, 35) arranged to cooperate with a corresponding connection member (28) provided within the refrigerator and connected to the control means (30).

11. A device as claimed in claim 1, characterised in that the cable is associated with a known winder.

12. A device as claimed in claim 1, characterised in that the connection member (28) comprises various inlets (28A, B, C, D) able to selectively receive corresponding connectors (27, 48, 49, 50) of the electrical connection element (26, 35), the control means (30) advantageously recognizing the type of retention means (12) on the basis of the particular coupling arrangement between said member (28) and said connection element (26, 35).

13. A device as claimed in claim 1, characterised in that the connection means are a transmitter member (87) arranged to cooperate with a receiver element (89) associated with the control means (30), said transmitter member being associated with the sensor (11).

14. A device as claimed in claim 1, characterised in that the control means are a microprocessor circuit.

15. A device as claimed in claim 1, characterised in that the control means (30) are connected to warning horns and/or lamps (72, 71), these latter, the interface (73) and the display means (60) being preferably arranged on a front portion (1A) of the refrigerator (1).
